(19) **Europäisches Patentamt / European Patent Office / Office européen des brevets**

(11) **EP 3 680 808 B1**

(12) # EUROPEAN PATENT SPECIFICATION

(45) Date of publication and mention of the grant of the patent:
**03.12.2025 Bulletin 2025/49**

(21) Application number: **18851007.7**

(22) Date of filing: **31.08.2018**

(51) International Patent Classification (IPC):
**G06V 10/75** (2022.01)   **G06V 20/20** (2022.01)
**G06T 7/246** (2017.01)   **G06T 7/73** (2017.01)
**G06T 15/06** (2011.01)

(52) Cooperative Patent Classification (CPC):
**G06V 20/20; G06T 7/246; G06T 7/73; G06T 15/06; G06V 10/751;** G06T 2207/10016

(86) International application number:
**PCT/CN2018/103612**

(87) International publication number:
**WO 2019/042426 (07.03.2019 Gazette 2019/10)**

(54) **AUGMENTED REALITY SCENE PROCESSING METHOD AND APPARATUS, AND COMPUTER STORAGE MEDIUM**

VERFAHREN UND VORRICHTUNG ZUR VERARBEITUNG VON SZENEN DER ERWEITERTEN REALITÄT UND COMPUTERSPEICHERMEDIUM

PROCÉDÉ ET APPAREIL DE TRAITEMENT DE SCÈNE EN RÉALITÉ AUGMENTÉE, ET SUPPORT DE STOCKAGE INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2017 CN 201710787487**

(43) Date of publication of application:
**15.07.2020 Bulletin 2020/29**

(73) Proprietor: **Tencent Technology (Shenzhen) Company Limited**
**Shenzhen, Guangdong, 518057 (CN)**

(72) Inventor: **XIANG, Xiaoming**
**Nanshan District Shenzhen, Guangdong 518057 (CN)**

(74) Representative: **Novagraaf International SA**
**Chemin de l'Echo 3**
**1213 Onex, Geneva (CH)**

(56) References cited:
CN-A- 101 101 505   CN-A- 103 839 277
CN-A- 104 050 475   CN-A- 107 590 453
US-A1- 2003 165 276   US-A1- 2012 180 084
US-A1- 2015 193 970

- **CHEOK A D ET AL: "Augmented reality camera tracking with homographies", IEEE COMPUTER GRAPHICS AND APPLICATIONS, IEEE SERVICE CENTER, NEW YORK, NY, US, vol. 22, no. 6, 1 November 2002 (2002-11-01), pages 39 - 45, XP011095118, ISSN: 0272-1716, DOI: 10.1109/ MCG.2002.1046627**
- **TAEHEE LEE ET AL: "Viewpoint stabilization for live collaborative video augmentations", MIXED AND AUGMENTED REALITY, 2006. ISMAR 2006. IEEE/ACM INTERNATIONAL SYMPOSIUM ON, IEEE, PI, 22 October 2006 (2006-10-22), pages 241 - 242, XP058378993, ISBN: 978-1-4244-0650-0, DOI: 10.1109/ ISMAR.2006.297824**

## Description

### FIELD

This application relates to the field of augmented reality technologies, and in particular, to a method and a device for processing augmented reality scenario, and a computer storage medium.

### BACKGROUND

An augmented reality (AR) technology is a technology of computing a position of a target object in a shot image in real time, and then adding virtual content such as a virtual image and a virtual video at a corresponding position in the image. Based on the AR technology, a virtual scenario and a real environment may be combined, and interact with each other effectively.

The AR scenario may be implemented based on an implementation of an image recognition technology. That is, an image object on which virtual content is to be superimposed in each video frame shot by an image shooting apparatus is recognized by using the image recognition technology, then a position of the image object in the video frame is determined, and the virtual content is superimposed based on the determined position. For example, a desk is recognized in a shot video frame by using the image recognition technology, virtual content such as a book and a computer is superimposed on a desktop of the desk based on the position of the desk in the image.

In the foregoing AR implementation, each shot video frame is analyzed and recognized, resulting great consumption of device software and hardware resources. In addition, the entire video frame is analyzed and recognized during the image recognition, which requires much time, especially in a case of a shot image of a complicated real environment.

US patent application US 2012/0180084 describes a method that inserts a virtual image into a sequence of video frames. The method includes capturing geometric characteristics of the sequence of video frames, employing the captured geometric characteristics to define an area of the video frames for insertion of a virtual image, registering a video camera to the captured geometric characteristics, identifying features in the sequence of video frames to identify the defined area of video frames for insertion of the virtual image, and inserting the virtual image in the defined area. Vanishing points are estimated to determine the geometric characteristics, and the virtual image is blended with the area of video frames prior to inserting the virtual image in the defined area.

US patent application US 2015/0193970 describes a video playing method based on augmented reality technology. In combination with augmented reality technology, a rectangular plane 3D model which completely covers a target picture in a current scene image is drawn, and at the same time, after a video file related to the target picture is separated into an audio stream and a video stream, a video image frame in the video stream is taken as a texture and is mapped to the 3D model frame by frame, and graphic rendering is performed; and finally, a scene image captured by a video camera and the rendered 3D model are fused and output, and the audio stream data is output synchronously. Correspondingly, also disclosed are a video playing system based on augmented reality technology and mobile terminal. The picture information in newspapers and periodicals, magazines and other print media can be easily converted into video information, and the video completely fits the picture in the spatial position, so that a user obtains a new audio-visual experience of combining emotion with scenery; and newspapers and periodicals, magazines and other paper media can also realize diversified propagation of information by virtue of the technology of the present invention, and provide a precise fast video push service.

### SUMMARY

The invention is defined in the independent claim. Optional features are set out in the dependent claims.

The details of one or more embodiments of the present disclosure are disclosed in the following accompanying drawings and descriptions. Other features, objectives, and advantages of the present disclosure become clearer from the specification, the accompanying drawings, and the claims.

### BRIEF DESCRIPTION OF THE DRAWINGS

To describe technical solutions in the embodiments of the present disclosure clearer, the following simply describes the accompanying drawings required in descriptions of the embodiments.

FIG. 1 is a flowchart of configuring an attribute database and a marker image;
FIG. 2 is a flowchart of a matching relationship between a video frame and a marker image;
FIG. 3 is a flowchart of performing object recognition on a video frame according to an embodiment of the invention;

FIG. 4 is a schematic diagram of a relationship between a transformed marker image and a video frame;

FIG. 5a is a schematic diagram of a shooting scenario according;

FIG. 5b is a schematic diagram of an application scenario;

FIG. 6 is a schematic diagram of a coordinate position relationship;

FIG. 7 is a flowchart of an augmented reality scenario processing method according to an embodiment of part of the invention, the invention including additional steps;

FIG. 8 is a flowchart of an augmented reality scenario processing method;

FIG. 9 is a flowchart of a method for setting an attribute database;

FIG. 10 is a schematic structural diagram of an augmented reality scenario processing apparatus; and

FIG. 11 is a schematic structural diagram of a smart device used to implement the method of the invention.

## DESCRIPTION OF EMBODIMENTS

To make the objectives, the technical solutions, and the advantages of the present disclosure clearer, the following further describes the present disclosure in detail with reference to the accompanying drawings and the embodiments. It should be understood that, specific embodiments described herein are only used for explaining the present disclosure, but not used for limiting the present disclosure.

To implement an AR scenario, in the embodiments of the invention, multiple marker images including various objects are set. After a video is shot by using an image shooting apparatus related to an AR device, whether a video frame includes an object in a marker image is first determined by using image recognition. If the video frame includes the object, the marker image is determined as a target marker image, and the object in the marker image is determined as a target object. In addition, tracking points associated with the target marker image are determined in the video frame. Based on these tracking points, in a subsequently shot video frame, these tracking points are tracked and recognized by using an optical flow tracking algorithm, to track and determine feature point information corresponding to feature points in a new video frame, and a homography matrix, that is an H matrix, between the new video frame and the target marker image is determined based on the feature point information. The virtual content is superimposed based on the H matrix, to implement the AR scenario.

The marker images may be images preset by a user, may be images obtained through shooting or may be produced digital images. The marker images have high resolution and regularity, and multiple feature points can be recognized from the marker images, to facilitate subsequent processing such as image recognition and H matrix generation.

By using the optical flow tracking algorithm, motion vectors of multiple feature points on adjacent video frames (or two video frames between which there is an inter-frames) shot by the image shooting apparatus can be recognized. The motion vector may include a moving direction and a moving speed of the feature point on the video frames. According to the optical flow tracking algorithm, positions of feature points matching tracking points in a current video frame can be approximately determined based on positions of the tracking points determined in a previous video frame. The tracking points on the previous video frame are determined based on the target marker image.

After the target object in the target marker image included in the video frame is recognized and determined, optical flow tracking is performed. The optical flow tracking is performed between video frames. Due to less time-consuming, a high tracking frame rate, a small change between two adjacent frames, and stable performance of the optical flow tracking algorithm, matched feature points in the two video frames can be determined quickly, accurately, and efficiently. In an embodiment, when the number of trackable feature points in the video frame is reduced due to quick moving of the target object, changing environment illumination, or a changing occlusion, points from the target marker image may be supplemented by using a template matching method, to supplement new feature points used for performing optical flow tracking, thereby supplementing high quality feature points in time to perform optical flow tracking, so that when the H matrix is computed subsequently, there are sufficient feature points to determine a mapping relationship, and optical flow tracking can be performed constantly.

The H matrix between images can better associate two video frames, and an extrinsic parameter matrix of the image shooting apparatus used for shooting the current video frame is obtained based on the H matrix. The extrinsic parameter matrix is a current camera imaging parameter obtained through solution. If virtual content is to be superimposed on an actual object, the virtual content may be regarded as an actual object, and the actual object is imaged on the video frame of the image shooting apparatus by use the imaging parameter (the extrinsic parameter matrix). This imaging process may be regarded as a process of drawing a virtual object on the video frame based on the extrinsic parameter matrix.

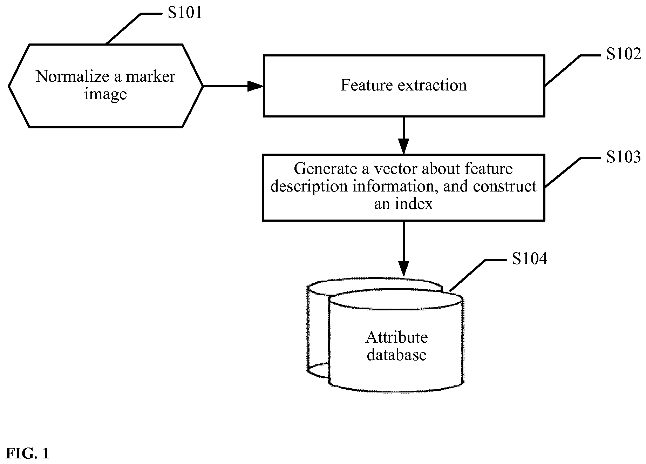

In an embodiment, a marker image including an object may be first configured, to facilitate subsequent object recognition performed on the video frame. After a marker image inputted by a user is received, as shown in FIG. 1, in step S101, the marker image may be first normalized. In step S102, feature extraction is performed on the normalized marker image. In an embodiment, ORB (ORiented Brief, which is an image feature detection operator) information of a feature

**EP 3 680 808 B1**

point is extracted from the marker image. The ORB information is used as feature description information of the feature point. The ORB information includes information of pixel points around the feature point on the image, and is used for describing the feature point. Based on a similarity between ORB information of two feature points on two images, whether the two feature points match each other may be determined. The feature points described by the ORB information may be referred to as ORB points. The ORB information extracted from the marker image refers to feature point description information of the feature point of the target object in the marker image.

After multiple pieces of feature description information of multiple feature points in the marker image is obtained, in step S103, a vector of the feature description information is generated, and an index is constructed. That is, indexes of the multiple pieces of feature description information of the marker image is constructed. In an embodiment, a feature description sub-vector may be first generated, and then the index of each piece of feature description information is constructed by using an LSH (Locality Sensitive Hashing) algorithm. In step S104, the multiple pieces of feature description information for which the indexes are constructed are stored in an attribute database and are used as the feature description information of the marker image, and the feature description information of the marker image in the attribute database forms an ORB point set of the marker image.

The feature description information is extracted from the marker image, and the index of the feature description information is constructed by using the LSH algorithm, to preprocess a marker image set with limited network resources, thereby facilitating extraction of ORB information from the video frame shot by the image shooting apparatus in a subsequent recognition process and retrieval based on the index in the attribute database to obtain a target marker image matching the video frame, and determine a target object in the video frame.

After the marker image and the attribute database are configured, subsequent object recognition processing is performed for recognizing an object from the shot video frame, to determine a marker image associated with a currently shot video.

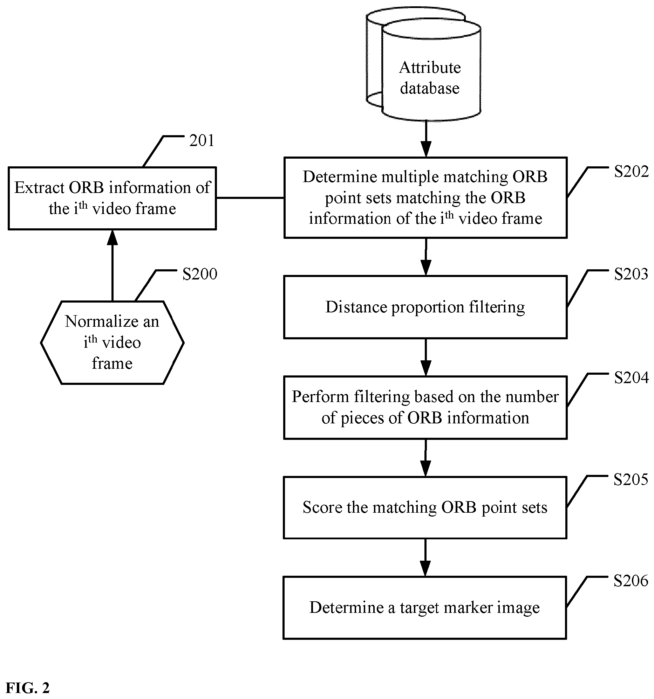

The image shooting apparatus corresponding to the AR device is used to shoot an environment video, to obtain a video frame. As shown in FIG. 2, in step S200, an $i^{th}$ video frame obtained by shooting is normalized. In step S201, ORB information is extracted from the $i^{th}$ video frame, and based on the ORB information of the $i^{th}$ video frame, retrieval is performed in the attribute database based on the index. Multiple pieces of ORB information are extracted from the $i^{th}$ video frame. The $i^{th}$ video frame is a current video frame among video frames shot by the image shooting apparatus.

In an embodiment, when retrieval is performed based on the index, in step S202, multiple matching ORB point sets matching the ORB information of the $i^{th}$ video frame is determined from the attribute database. The multiple matching ORB point sets includes an optimal matching ORB point set and a suboptimal matching ORB point set. Each matching ORB point set includes sufficient number of pieces of ORB information which is similar to corresponding ORB information of the $i^{th}$ video frame.

In step S203, distance proportion filtering is performed, to filter out some matching ORB point sets. Based on a vector Hamming distance of ORB point sets, the matching ORB point sets may be filtered based on a distance proportion, to determine optimal point sets among the matching ORB point sets. The distance proportion filtering includes: determining whether a similarity between each of matching ORB point sets and the ORB information of the $i^{th}$ video frame is greater than a preset filtering similarity threshold, to filter out matching ORB point sets with the similarity less than the preset filtering similarity threshold.

In step S204, filtering is further performed based on the number of pieces of the ORB information, that is, filtering is performed based on the number of pieces of ORB information of the filtered matching ORB point set, and the matching ORB point set with the number of pieces of the ORB information being less than a preset number threshold is filtered out. Alternatively, N matching ORB point sets (N is a positive integer) with the greater number of pieces of ORB information (greater than the preset number threshold) are obtained from the filtered matching ORB point sets.

In other embodiments, step S204 may be first performed to perform filtering based on the number of pieces of the ORB information, and then step S203 is performed to perform screening and filtering according to a distance proportion.

In step S205, the matching ORB point sets obtained by filtering in step S204 are scored. The scoring may including: scoring the matching ORB point sets obtained by filtering based on the number of feature points included in each of the matching ORB point sets. A greater number indicates a higher score, and the remaining matching ORB point sets are sorted based on a scoring result. In step S206, a target marker image is determined based on the scoring result. Based on the scoring result, an ORB point set with the highest score is determined to be associated with the $i^{th}$ video frame, and a marker image corresponding to the ORB point set with the highest score is determined as the target marker image for subsequently processing a video shot by the image shooting apparatus. The $i^{th}$ video frame may be referred to as a first video frame.

In an embodiment, if the matching ORB point set matching the ORB information of the $i^{th}$ video frame cannot be determined from the attribute database, a next video frame is processed in the same manner as the $i^{th}$ video frame.

In an embodiment, after it is determined that the $i^{th}$ video frame matches the target marker image, a video frame subsequent to the $i^{th}$ video frame is processed based on a tracking algorithm combining optical flow tracking and template matching, to determine a relationship between the video frame subsequent to the $i^{th}$ video frame and the target marker

4

image, and determine an H matrix between the video frame subsequent to the $i^{th}$ video frame and the target marker image, and the like.

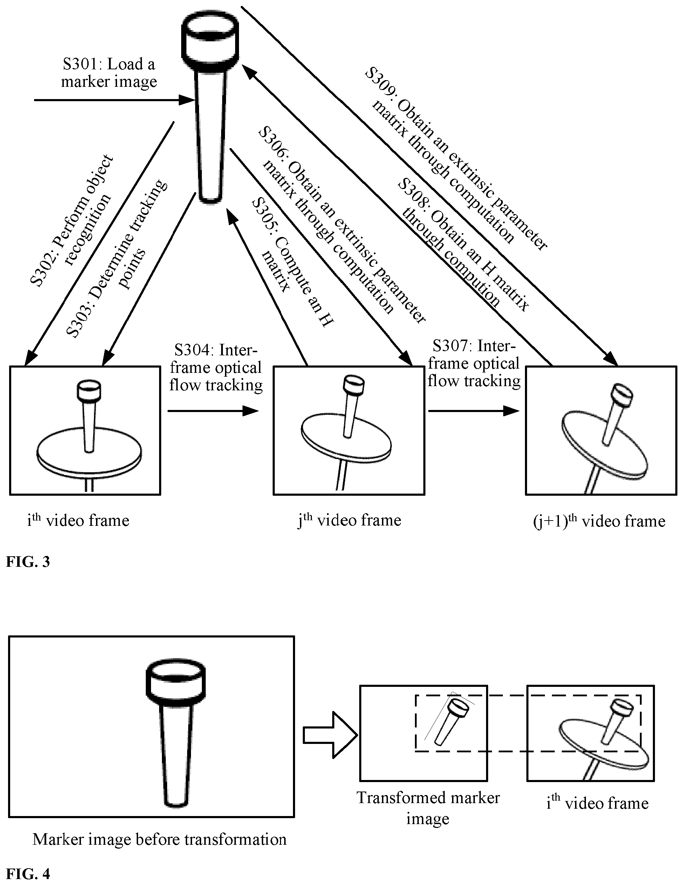

FIG. 3 is a flowchart of performing object recognition on a video frame according to the invention. Object recognition performed on the video frame is performed by a smart device having an image analysis function. The smart device receives video frames shot by an image shooting apparatus and performs object recognition on the video frames. In an embodiment, the method may be performed by a dedicated smart device or an AR device. An object recognition process according to an embodiment of the invention includes the following steps S301 to S309. In this embodiment of the present disclosure, a target object being a "torch" is used as an example for description.

In step S301, a marker image is loaded.

The marker image is loaded by the following steps. An input original marker image is scaled to a suitable dimension to obtain a grayscale image, where the grayscale image obtained by the processing has a size greater than the size of a video frame on which object recognition is to be performed. The size of the grayscale image may be, for example, 1.2 times (for example, 1.2 times each of the length and the width) of the video frame on which object recognition is to be performed. First feature point information is extracted after the grayscale image is obtained, and second feature point information is generated. The first feature point information is used for determining whether a corresponding video frame matches the marker image in a subsequent video frame recognition process, and the first feature point information may be ORB information. The second feature point information is used for performing subsequent image tracking recognition. The second feature point information may be a corner feature of GFTT (Good Features To Track, which is the feature point to be tracked). A generated second feature point is a corner with obvious features, and is suitable for subsequent optical flow tracking between video frames. Some or all feature points in a target marker image represented by the second feature point information are determined as source feature points. In an embodiment, these source feature points may be feature points in a target object in the target marker image. The target marker image may include only one target object. For example, for a torch in FIG. 3, all extracted ORB points and GFTT points may be feature points on the torch, such as points on a pattern part, points at the top of the torch, and the like.

In step S302, object recognition is performed.

In a case that the extracted feature point information of a video frame is the ORB information, object recognition is performed on the ORB information of the video frame and ORB information of the foregoing loaded marker images. If a marker image is determined to be associated with the video frame, subsequent steps are performed from the video frame. In this embodiment, an $i^{th}$ video frame is recognized to be associated with a target marker image among the marker images. After the $i^{th}$ video frame associated with the target marker image is determined, an initial extrinsic parameter matrix of the image shooting apparatus is computed, and is used for a subsequent operation of generating tracking points. The initial extrinsic parameter matrix is determined based on an H matrix obtained through computation based on GFTT feature point information of the $i^{th}$ video frame and GFTT feature point information of the target marker image.

In step S303, tracking points used for performing optical flow tracking are determined.

The object recognition operation in S302 is relatively time-consuming, the object recognition operation and the image shooting apparatus shooting a video are asynchronously performed. Therefore, after object recognition is performed on the $i^{th}$ video frame and the $i^{th}$ video frame is determined to be associated with the target marker image, the currently obtained video frame is a $j^{th}$ video frame following the $i^{th}$ video frame at an interval of several frames. To determine feature point information of the $j^{th}$ video frame, tracking points in the $i^{th}$ frame is to be first determined based on the source feature points in the target marker image, and feature point information of the tracking points is obtained.

As shown in FIG. 3, the $i^{th}$ video frame shot by the image shooting apparatus may be used as a scenario in which the torch determined as the target object is placed on a fixing mechanism. In addition to the torch, the $i^{th}$ video frame further includes other objects such as a fixing apparatus. The tracking points found based on the feature points in the target marker image refer to feature points in the $i^{th}$ video frame related to the torch.

An H matrix between the target marker image and the $i^{th}$ video frame is obtained through computation by using a matching result of object recognition, that is, the ORB information of the marker image and the ORB information of the $i^{th}$ video frame which match each other. Homogeneous transformation is performed on the target marker image by using the H matrix, and perspective transformation is performed on the target marker image on which the homogeneous transformation has been performed, to obtain a transformed marker image. The transformed target marker image is an image in the same size as the $i^{th}$ video frame, and an image position region of the target object in the transformed target marker image is the same as an image position region that is of a corresponding target object in the $i^{th}$ video frame and that is in the $i^{th}$ video frame. Alternatively, due to a possible computational error of the H matrix, the image position region of the target object in the target marker image is close to the image position region of the target object in the $i^{th}$ video frame. A relationship among the marker image before the transformation, the transformed marker image, and the video frame is shown in FIG. 4. After the homogeneous transformation and the perspective transformation, the target object in the target marker image may coincide with the target object in the $i^{th}$ video frame. As shown in a dotted box in FIG. 4, an image position of the torch in the transformed marker image is almost the same or basically the same as an image position of the torch in the $i^{th}$ video frame.

In addition, the source feature points in the target marker image are transformed based on the H matrix between the target marker image and the $i^{th}$ video frame, to obtain image position coordinates corresponding to the source feature points in the transformed target marker image.

The tracking points in the $i^{th}$ video frame are determined based on the source feature points in the target marker image. By using position coordinates of a source feature point in the transformed marker image as the center, an image in a 10*10 square region at a corresponding position region in the transformed marker image is determined as a template image. By using the same coordinates (target coordinates) as the center, an image in a 20*20 square region in the $i^{th}$ video frame is determined as a search window (search image). The search window is searched based on the template image. In the search process, a similarity between the template image and the search image is determined by using a NCC (Normalized Cross Correlation) algorithm. If the similarity is greater than 0.8, a point in the $i^{th}$ video frame corresponding to the current target coordinate is determined as a tracking point, and position information of the tracking point is used as feature point information of the $i^{th}$ video frame. Then, by using a position of a next source feature point as the center, the same search manner is performed, until a set number of tracking points is found, and a set number of pieces of feature point information of the $i^{th}$ video frame are obtained. The feature point information of the $i^{th}$ video frame includes position information of the tracking points.

Search and detail comparison is performed within a search window range by using a template matching method. On one hand, impact brought by the computational error of the H matrix can be avoided. For example, computation is performed on the source feature points in the target marker image based on the H matrix, to obtain the tracking points in the $i^{th}$ video frame. However, due to the error of the H matrix, the tracking points obtained through computation may not match the source feature points. On the other hand, feature points of a possible obscured part and a possible deformation part can be removed.

The foregoing involved size values and shapes are only examples. In other embodiments, regions of other sizes and other shapes may be alternatively determined. For example, a 5*10 rectangular region or a circular region with a radius of 10 may be determined. The size value uses a pixel point as a unit. For example, 10*10 refers to a position region of 10 pixel points*10 pixel points.

After the feature point information of the $i^{th}$ video frame is determined, for the $j^{th}$ video frame, feature points corresponding to the feature point information in the $j^{th}$ video frame are tracked and recognized by using an inter-frame optical flow tracking algorithm.

In step S304, inter-frame optical flow tracking processing is performed.

On the basis of the $i^{th}$ video frame whose feature point information corresponding to the tracking points is determined, effective feature points are found in the $j^{th}$ video frame by using the optical flow tracking algorithm and based on motion vectors of points in an optical flow field between the $i^{th}$ video frame and the $j^{th}$ video frame and positions of the tracking points in the $i^{th}$ video frame. These effective feature points are used as basic position points for performing image search on the $j^{th}$ video frame subsequently.

In an embodiment, the feature point information of the tracking points obtained in the $i^{th}$ video frame is first feature point information. In the $i^{th}$ video frame, the template image is determined by using a first feature point corresponding to the first feature point information as the center. In the $j^{th}$ video frame, the search image is determined by using the effective feature point obtained by performing optical flow tracking on the first feature point as the center. Image search is performed on the search image. When a sub-image whose similarity with the template image is greater than a preset similarity threshold is determined in the search image, the matched effective feature point is used as a second feature point. Second feature points are searched for, until of the number of second feature points reaches a preset quantity threshold.

In S305, an H matrix is obtained through computation.

Based on the first feature point information, a mapping relationship between the first feature point information and second feature point information of the second feature points corresponding to the first feature point information, and a mapping relationship between the first feature point information and source feature point information corresponding to the first feature point information, a mapping relationship between the second feature point information of the $j^{th}$ video frame and the source feature point information corresponding to the target marker image is constructed. Finally, the H matrix between the $j^{th}$ video frame and the target marker image is obtained through computation based on the mapping relationship between the second feature point information and the corresponding source feature point information.

Compared with the $i^{th}$ video frame, the $j^{th}$ video frame may be shot at a different position point and/or angle after the image shooting apparatus moves. As shown in FIG. 3, image positions of the torch and the fixing mechanism in the $j^{th}$ video frame are different from image positions of torch and the fixing mechanism in the $i^{th}$ video frame. The second feature point information obtained by tracking in the $j^{th}$ video frame is obtained based on the tracking points in the $i^{th}$ video frame, and the tracking points in the $i^{th}$ video frame are obtained based on the source feature points in the target marker image. Therefore, the second feature point is related to the source feature point. Based on the mapping relationship between the second feature point information and the corresponding source feature point information, an H matrix between the $j^{th}$ video frame and the target marker image is obtained through computation. The H matrix represents a relationship between the $j^{th}$ video frame and the target marker image.

In S306, an extrinsic parameter matrix is obtained through computation.

The H matrix obtained through computation is processed to obtain an extrinsic parameter matrix. An extrinsic parameter matrix [r, t] of the image shooting apparatus is obtained by processing the H matrix that is between the $j^{th}$ video frame and the target marker image and that is obtained through computation. Based on the extrinsic parameter matrix and a known intrinsic parameter matrix of the image shooting apparatus, imaging processing is performed on the virtual content that is to be superimposed on the target object, to image the virtual content in the video frame.

In step S307, inter-frame optical flow tracking processing is performed.

Because the second feature point information of the $j^{th}$ video frame is determined, after a $(j+1)^{th}$ video frame is received, feature points corresponding to the second feature point information in the $j^{th}$ video frame are used as tracking points, to perform optical flow tracking, to determine third feature point information corresponding to the second feature point information in the $(j+1)^{th}$ video frame.

If a sufficient number of pieces of third feature point information of the $(j+1)^{th}$ frame are determined successfully, subsequent processing may be performed based on the third feature point information, to obtain an H matrix between the $(j+1)^{th}$ video frame and the target marker image, and determine an extrinsic parameter matrix used for shooting the $(j+1)^{th}$ video frame. If the number of pieces of the determined third feature point information is insufficient, tracking points may be supplemented in the $(j+1)^{th}$ video frame.

In an embodiment, if a minimum required number of pieces of third feature point information of the $(j+1)^{th}$ video frame is not determined successfully, for example, the number of pieces of the determined third feature point information is less than N (for example, N=5), it may be regarded that an environment of a current video shot by the image shooting apparatus is switched. In this case, the foregoing step S302 may be performed again, that is, object recognition and related processing are performed on the video frame again.

When feature point information of the $(j+1)^{th}$ video frame is determined, the second feature point information may be regarded as the first feature point information, and feature point information of the $(j+1)^{th}$ video frame that is to be determined is the second feature point information. For a manner for determining the feature point information of the $(j+1)^{th}$ video frame, reference may be made to the determining manner in the foregoing step S303 in which search is performed based on the template image and the search image.

The $(j+1)^{th}$ video frame and the $j^{th}$ video frame are adjacent video frames, and an inter-frame space between the $(j+1)^{th}$ video frame and the $j^{th}$ video frame is less than an inter-frame space between the $j^{th}$ video frame and the $i^{th}$ video frame. Therefore, when search is performed on the $(j+1)^{th}$ video frame based on the template image and the search image, a search window corresponding to the search image may be a smaller window. For example, if the template image has a size of 10*10, the search image having a size of 13*13 may be used for rapidly determining corresponding feature points in the $(j+1)^{th}$ video frame, to obtain feature point information, instead of a large window having a size of 20*20.

In a process of determining the feature point information of a subsequent video frame by using optical flow tracking, for example, in a process of determining the first feature point information and the second feature point information, due to moving of the image shooting apparatus, a part of the target object in the video frame may be out of a camera shooting range, or a part of the target object may be occluded, which may cause fewer tracking points for performing optical flow tracking in the video frame. In this case, the tracking points need to be supplemented. For the tracking point supplementing step, reference may be made to the description in step S303. Specifically, new tracking points are determined in the target marker image and the current video frame with fewer tracking points for optical flow tracking. An extrinsic parameter matrix obtained through computation based on a previous frame is used. The feature points are supplemented from the target marker image, such that the tracking points are supplemented, errors accumulated in the optical flow tracking process can be corrected, and impact on the H matrix computation can be reduced, thereby correcting the extrinsic parameter matrix of the image shooting apparatus to some degree.

If the number of pieces of the feature point information determined for the $(j+1)^{th}$ video frame based on the optical flow tracking algorithm is small, feature point information of the tracking points may be supplemented in the $(j+1)^{th}$ video frame based on the source feature points in the target marker image. For the manner used for supplementing, reference may be made to the description in step S303. Specifically, new tracking points are supplemented in the $(j+1)^{th}$ video frame based on the source feature points in the target marker image, the template image determined in the target marker image, and the search image determined in the $(j+1)^{th}$ video frame.

In step S308, an H matrix is obtained through computation.

Based on a mapping relationship between the second feature point information and the third feature point information, and a mapping relationship between the second feature point information and the source feature point information of the target marker image, a mapping relationship between the third feature point information and the source feature point information is determined, and an H matrix between the $(j+1)^{th}$ video frame and target marker image is constructed based on the mapping relationship between the third feature point information and the source feature point information.

In step S309, an extrinsic parameter matrix is obtained through computation.

The H matrix obtained through computation is processed to obtain the extrinsic parameter matrix. After the H matrix is processed, the extrinsic parameter matrix of the image shooting apparatus used for shooting the $(j+1)^{th}$ video frame is obtained.

To obtain a more smooth camera track, a sliding window policy may be used, and extrinsic parameter matrixes of all video frames in a sliding window are optimized by using a bundle method, to minimize the projection error of the extrinsic parameter matrix of the image shooting apparatus. When a new video frame appears, an original video frame in the sliding window is replaced. That is, when multiple video frames are used for observing the same point in a scenario, the extrinsic parameter matrix corresponding to each video frame in the sliding window is used as a constraint condition. For the last video frame in the sliding window, not only the extrinsic parameter matrix needs to be obtained through computation based on the foregoing mentioned H matrix, but also the extrinsic parameter matrixes corresponding to previous video frames in the sliding window are used as a constraint condition, to correct the extrinsic parameter matrix of the last video frame obtained through computation. With the above method, and in combination with the optimization method, errors of the point projected on all frames are minimized, so that the extrinsic parameter matrix is stable.

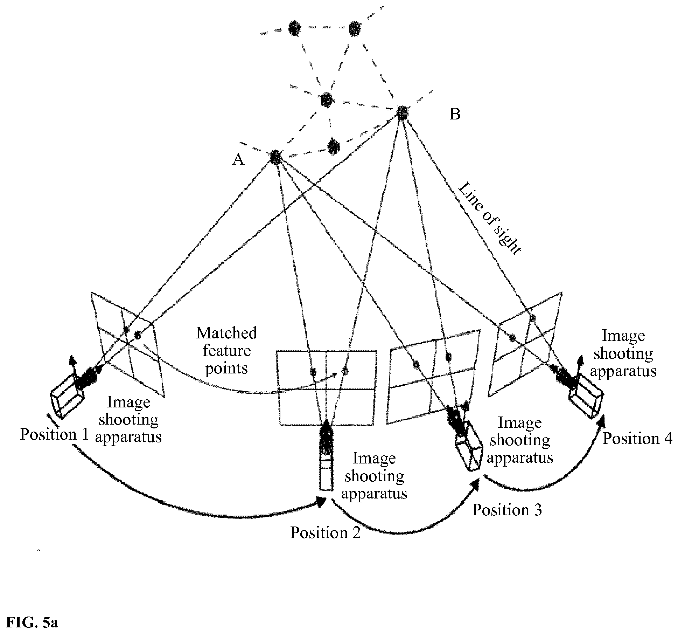

In an example, four video frames may exist in the sliding window. As shown in FIG. 5a, for point A on a shot object, the image shooting apparatus shoots point A at four positions, inlcuding: position 1, position 2, position 3, and position 4, which respectively corresponding to the four video frames. The H matrix and the extrinsic parameter matrix are obtained through computation for each video frame in the foregoing mentioned manner. The extrinsic parameter matrixes used for shooting at the three positions position 1 to position 3 are used to correct the extrinsic parameter matrix obtained through computation used for shooting the fourth video frame at position 4, to obtain a more accurate extrinsic parameter matrix.

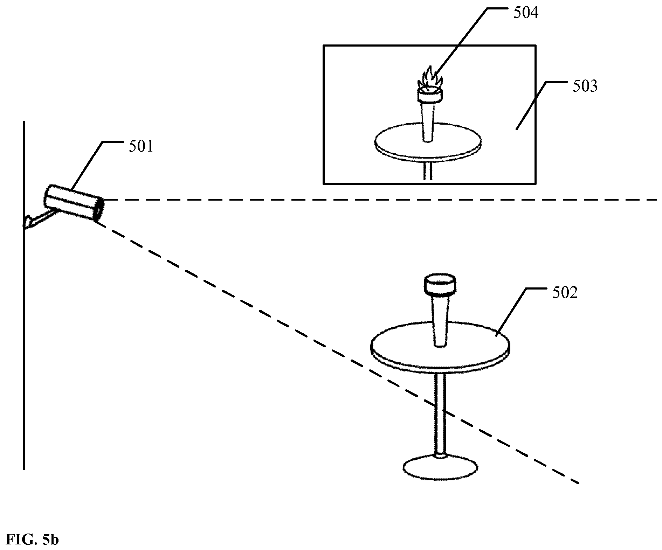

FIG. 5b is a schematic diagram of an application scenario. A real scenario 502 includes a desktop and a torch placed on the desktop, and the torch has no flame. The image shooting apparatus 501 shoots the real scenario 502, to obtain the foregoing mentioned $i^{th}$ video frame, $j^{th}$ video frame, and $(j+1)^{th}$ video frame, and transmit these video frames to an AR device. The AR device performs the foregoing augmented reality on the processing on these video frames, and presents video frames obtained after the augmented reality processing to users on a display screen 503. On the augmented reality image, a flame image 504 is a virtual image added on the corresponding video frames.

In a case that optical flow tracking is invalid due to quick moving of the image shooting apparatus or a dramatic change of illumination, for example, in a case that sufficient feature point information cannot be determined by using the optical flow tracking algorithm, the algorithm may be regarded invalid. In this case, sensing data of another motion sensor device on a terminal may be obtained to determine an attitude of the image shooting apparatus, to obtain a current extrinsic parameter matrix of the image shooting apparatus. For example, sensing data of an IMU (Inertial Measurement Unit) is obtained to determine the attitude of the image shooting apparatus. When the motion sensor is invalid, an attitude of the IMU may be used to provide a transient camera attitude, to improve the robustness in a case of dramatic moving.

After the extrinsic parameter matrix is obtained, imaging processing of an AR scenario is performed based on the extrinsic parameter matrix. First, virtual content to be superimposed on a target object of a target marker image is obtained. A superimposed position at which the virtual content is to be superimposed on the target object is determined. The image shooting apparatus is controlled to perform shooting by using the extrinsic parameter matrix, and the virtual content is superimposed on a shot video frame according to the superimposed position. For example, the virtual content may be a flame image to be superimposed on the torch. The virtual content may be a preset image. The superimposed position is a position at which the virtual content is to be superimposed on the target object according to user requirements. In the case of the torch, the user intends to superimpose the flame image on the top of the torch, and the superimposed position may be correspondingly regarded as a position region at the top of the torch of the target marker image. Then, shooting is performed according to the extrinsic parameter matrix obtained through computation. Because the target marker image corresponds to a world coordinate system, the flame image may be regarded as an actual object, of which the position in the world coordinate system may be determined based on the superimposed position. Then, an image position of the flame image in a shot video frame may be obtained based on the extrinsic parameter matrix and the intrinsic parameter matrix.

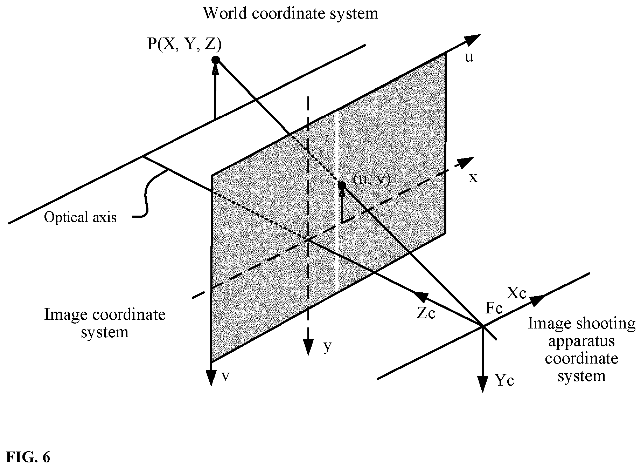

Superimposing the virtual content on the $j^{th}$ video frame is used as an example. FIG. 6 shows a world coordinate system $(X, Y, Z)$, an image coordinate system $(u, v)$, and an image shooting apparatus coordinate system $(X_C, Y_C, Z_C)$. Because the H matrix between the $j^{th}$ video frame and the target marker image is obtained through computation, the world coordinate system shown in FIG. 6 may be regarded as a coordinate system of a plane on which the target marker image is located, and each of the feature points of the target object in the target marker image is a coordinate point in the world coordinate system. When the virtual content is to be superimposed on the target object, for example, when a virtual flame image is superimposed on the top of the torch, the virtual content may be regarded as an actual object. For example, P in FIG. 6 is regarded as a point on the actual object corresponding to the virtual content, and the object is imaged on the video frame based on the current extrinsic parameter matrix, and is imaged at a corresponding position of the target object, for example, at the top of the torch. Because the position of the torch is known, and point P on the actual object corresponding to the virtual content that is to be superimposed is also known, based on the world coordinate system (a planar coordinate system of the target marker image), the extrinsic parameter matrix and the intrinsic parameter matrix of the image shooting apparatus, and a position at which the virtual flame is to be imaged, the virtual flame may be imaged on the $j^{th}$ video frame, and presented to the user. For example, point P may be imaged as point P' on the video frame.

In addition, the embodiments of the present disclosure involves more than simply determining the target object based on an image similarity between two video frames and superimposing the virtual content. Instead, the target object is determined in a manner of solving an extrinsic parameter of a camera by using the optical flow tracking algorithm in combination with the homography matrix and the virtual content is superimposed on the target object. Because only some feature points need to be analyzed and compared, the time required for recognizing a target is greatly reduced, software and hardware resources are saved, and target recognition efficiency of the video frame is improved, so that the implementation of the AR scenario is quicker and more accurate.

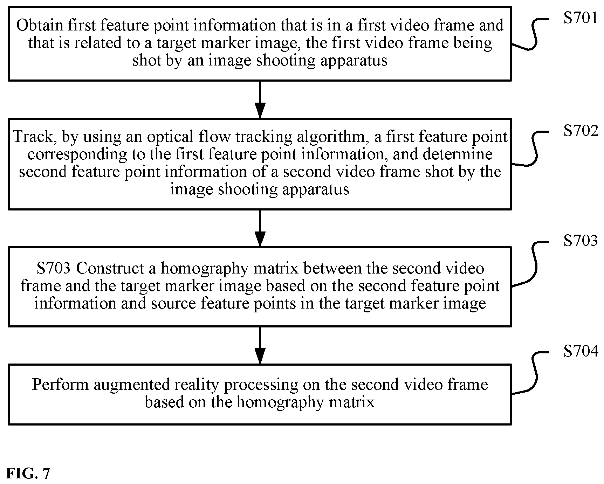

FIG. 7 is a flowchart of an augmented reality scenario processing method according to part of an embodiment implementing the method of the invention, the method of the invention including additional steps as set out in the claims. The method is performed by a smart device having an image analysis function. The smart device can receive video frames shot by an image shooting apparatus and perform object recognition on the video frames. In an embodiment, the method may be performed by a dedicated smart device or an AR device. The method includes the following steps S701 to S704.

In step S701, first feature point information that is in a first video frame and that is related to a target marker image is obtained, the first video frame being shot by an image shooting apparatus.

The target marker image is a marker image determined from a marker image set. Whether the first video frame matches the marker image may be determined based on ORB information of the first video frame and ORB information of the marker image. According to the invention, if the first video frame matches the marker image, it may be determined that each of the first video frame and the target marker image includes a target object. For the manner for determining the first feature point information of the first video frame, reference is made to related description of determining tracking points in the $i^{th}$ video frame in the foregoing embodiments. Some or all first feature points may be used as tracking points, to facilitate subsequent feature point tracking.

In step S702, a first feature point corresponding to the first feature point information is tracked by using an optical flow tracking algorithm, and determine second feature point information in a second video frame shot by the image shooting apparatus.

Both the first video frame and the second video frame are shot by the image shooting apparatus, and the second video frame is shot after the first video frame is shot. In an embodiment, an optical flow field between the first video frame and the second video frame may be determined first, a position of a second feature point in the second video frame is approximately determined based on a motion vector of each of the first feature points in the optical flow field, and image search is performed based on the determined position, to determine the second feature point in the second video frame, and determine position information of the second feature point in the second video frame as the second feature point information.

For the implementation of determining the second feature point information in step S702, reference is made to the description of step S304 in the foregoing description. Specifically, an effective feature point in the second video frame corresponding to the first feature point is determined by using the optical flow field, then a template image is determined based on the position of the first feature point in the first video frame, and a search image is determined based on a position of the effective feature point in the second video frame. Whether the effective feature point is the second feature point is determined by performing image search and determining a similarity. After a number of pieces of second feature point information of second feature points with the number exceeding a preset number threshold are obtained, the following step S703 is performed.

In step S703, a homography matrix between the second video frame and the target marker image is constructed based on the second feature point information and source feature points in the target marker image.

After feature point information of two video frames matching each other is determined, a mapping relationship between feature points of two video frames is computed, and an H matrix determined based on the mapping relationship is the homography matrix. The manner for obtaining the homography matrix through computation based on the mapping relationship between the feature point information may be implemented by using an existing manner.

In step S704, augmented reality processing is performed on the second video frame based on the homography matrix.

The homography matrix is processed, to determine an extrinsic parameter matrix of the image shooting apparatus used for shooting the second video frame, and augmented reality processing is performed on the second video frame based on the extrinsic parameter matrix.

Step S704 may include the following steps: obtaining an intrinsic parameter matrix of the image shooting apparatus, obtaining an original extrinsic parameter matrix of the image shooting apparatus used for shooting the second video frame through computation based on the homography matrix and the intrinsic parameter matrix, and correcting the original extrinsic parameter matrix according to a stored extrinsic parameter matrix, to obtain the extrinsic parameter matrix of the image shooting apparatus when shooting the second video frame, where the stored extrinsic parameter matrix is an extrinsic parameter matrix used by the image shooting apparatus before the shooting of the second video frame. The correcting the original extrinsic parameter matrix based on the stored extrinsic parameter matrix is performed by performing optimization based on extrinsic parameter matrixes of all video frames in a sliding window by using a bundle method and a sliding window policy as described above. For details, reference may be made to the corresponding description in the above embodiment corresponding to FIG. 5a.

The camera performs imaging in a manner expressed by the following equation:

$$x_p = K * [r_1 r_2 r_3 t] * X_w \qquad \text{Equation 1,}$$

where $X_w$ is a point in a world coordinate system, that is, a position point in an environment, $[r_1, r_2, r_3, t]$ represents the extrinsic parameter matrix of the image shooting apparatus, $K$ represents the intrinsic parameter matrix of the image shooting apparatus, and point $x_p$ in a video frame may be obtained based on the three parameters.

The following Equation 2 may be obtained by transforming foregoing Equation 1:

$$x_p = K * [r_1 r_2 t] * X_w' \qquad \text{Equation 2.}$$

Because the video frame is a plane, and the video frame is regarded to be located on a plane xy of the world coordinate system, z is 0. The direction of r3 (z axis) is not used. Therefore, Equation 1 is transformed to obtain Equation 2.

In Equation 2, $K * [r_1 r_2 t]$ is an H matrix. Therefore, the matrix $[r_1 r_2 t]$ may be obtained through computation based on the H matrix and the intrinsic parameter matrix $K$. Refer to the following Equation 3:

$$K^{-1} * H = [r_1 r_2 t] \qquad \text{Equation 3.}$$

In addition, the value of $r_3$ may be obtained by using the following Equation 4.

$$r_3 = r_1 \cdot cross(r_2) \qquad \text{Equation 4,}$$

where *cross*() refers to a vector cross-product.

Based on Equation 3 and Equation 4, the extrinsic parameter matrix [r, t] of the image shooting apparatus may be obtained through computation.

Intrinsic parameters of the image shooting apparatus include parameters such as a focal length and the number of megapixels. Therefore, the intrinsic parameter matrix of the camera may be obtained based on parameters such as the focal length of the image shooting apparatus when performing shooting. After the H matrix between the video frame and the marker image is obtained through computation, the extrinsic parameter matrix may be obtained based on the foregoing Equation 3 and Equation 4.

If the video frame is scaled, appropriate correction may be performed on the above H matrix obtained through computation. In this case, the H matrix of the video frame is corrected according to a scaling proportion, including normalizing pixel coordinates of the video frame to a unit of length, that is, by multiplying the pixel coordinates by $M_{w2p}$. If the video frame is scaled, the pixel coordinates is multiplied by $M_s$ (scaling proportion). The correction is performed in a manner expressed by the following Equation 5 and Equation 6.

$$M_s * x_s = x_p = K * [r_1 r_2 t] * M_{w2p} * X_p' \qquad \text{Equation 5;}$$

and

$$H' = k^{-1} * M_s^{-1} * H * M_{w2p}^{-1} \qquad \text{Equation 6,}$$

where $H'$ is the corrected H matrix, and $H'$ is substituted into H in Equation 3, to obtain a more accurate extrinsic parameter matrix of the image shooting apparatus in combination with Equation 4.

The performing augmented reality processing on the second video frame after obtaining the extrinsic parameter matrix includes: obtaining virtual content to be superimposed on a target object in the target marker image; determining a superimposed position at which the virtual content is to be superimposed on the target object; and controlling the image shooting apparatus to perform shooting by using the extrinsic parameter matrix, and superimposing the virtual content on a shot video frame according to the superimposed position. For the manner for performing augmented reality processing on the target object in the shot video frame based on the extrinsic parameter matrix, reference may be made to the related description of the embodiment of FIG. 6.

In addition, for the first video frame, because it is determined that the target object exists in the first video frame, augmented reality processing also needs to be performed on the first video frame. An initial extrinsic parameter matrix used for shooting the first video frame is first determined, and augmented reality processing is performed on the first video frame based on the initial extrinsic parameter matrix. The initial extrinsic parameter matrix may be obtained through processing based on the H matrix between the first video frame and the target marker image. For the processing manner and the subsequent augmented reality processing for the first video frame, reference may be made to the description of the related content above. Details are not described herein again.

When optical flow tracking is invalid due to quick moving of the image shooting apparatus or a dramatic change of illumination, when the number of determined second feature points in the second video frame does not meet a number requirement, the extrinsic parameter matrix of the image shooting apparatus may be obtained through computation based on acquired motion sensing data about the image shooting apparatus, for example, IMU data. That is, in the process of performing the foregoing steps, whether the number of pieces of the determined second feature point information is less than a second number threshold is determined. If the number is less than the second number threshold, motion sensing data of the image shooting apparatus is obtained, and the extrinsic parameter matrix of the image shooting apparatus is determined based on the motion sensing data, and augmented reality processing is performed on the shot video frame based on the determined extrinsic parameter matrix.

The embodiments of the present disclosure involves more than simply determining the target object based on an image similarity between two video frames and superimposing the virtual content. Instead, the target object is determined in a manner of solving an extrinsic parameter of a camera by using the optical flow tracking algorithm in combination with the homography matrix and the virtual content is superimposed on the target object. Because only some feature points need to be analyzed and compared, the time required for recognizing a target is greatly reduced, software and hardware resources are saved, and target recognition efficiency of the video frame is improved, so that the implementation of the AR scenario is quicker and more accurate.

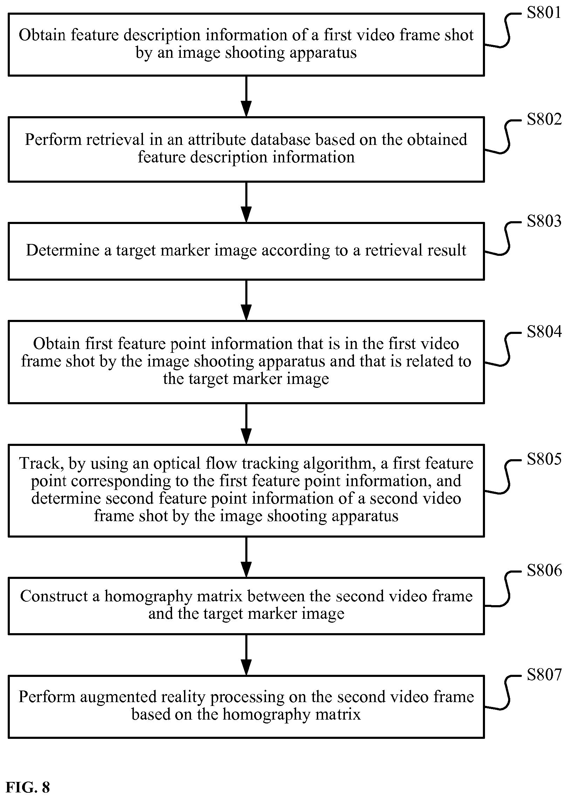

FIG. 8 is a flowchart of an augmented reality scenario processing method. Likewise, the method may be performed by a dedicated smart device or an AR device. The method includes the following steps S801 to S807.

In step S801, feature description information of a first video frame shot by an image shooting apparatus is obtained.

In an embodiment, ORB information is used as the feature description information. After a video frame shot by the image shooting apparatus is received, ORB information of the video frame may be extracted, and compared with ORB information of one or more marker images. Whether the video frame matches one of the marker images is determined according to a comparison result.

In step S802, retrieval is performed in an attribute database based on the obtained feature description information.

The information stored in the attribute database includes: feature description information respectively recorded for multiple configured marker images. In an embodiment, the attribute database stores information obtained after indexes of ORB information of one or more marker images is constructed, ORB information of a marker image can be found quickly based on the attribute database and the indexes, and a similarity between the ORB information of a video frame and the ORB information of the marker image is determined through comparision.

In S803, the target marker image is determined according to a retrieval result.

A similarity between feature description information of N feature points in the target marker image and feature description information of N feature points in the first video frame corresponding to the N feature points in the target marker image meets a similarity condition, that is, there are at least N feature points with the similarity between the feature description information of the N feature points in the target marker image and the feature description information of the N feature points in the first video frame being greater than a similarity threshold.

Multiple matching ORB point sets matching the ORB information of the first video frame are determined from the attribute database. Then, an optimal ORB point set is screened out by using a vector Hamming distance by scoring the ORB information in each ORB point set based on the number of pieces of ORB information in the ORB point set whose similarity with the ORB information of the first video frame is greater than a preset threshold. A marker image corresponding to the ORB point set is the target marker image.

In step S804, first feature point information that is in the first video frame shot by the image shooting apparatus and that is related to the target marker image is obtained.

Step S804 includes: obtaining an initial homography matrix between the first video frame shot by the image shooting apparatus and the target marker image, transforming the target marker image based on the initial homography matrix, to obtain a transformed target marker image; and determining a first feature point in the first video frame based on a position of a source feature point in the transformed target marker image, and obtaining position information of the first feature point in the first video frame, where the position information of the first feature point may be used as the first feature point information of the first video frame.

In an embodiment, the determining a first feature point in the first video frame based on a position of a first target feature point in the transformed target marker image includes: determining a template image by using the position of the source feature point in the transformed target marker image; determining a search image by using a position of an initial feature point that is in the first video frame and that is associated with the source feature point; performing image search in the search image according to the template image; and using the initial feature point as the first feature point if a sub-image is found in the search image, where an image similarity between the sub-image and the template image is greater than a preset similarity threshold.

For the manner for determining the first feature point information in the first video frame, reference may be made to the related description of determining tracking point information of the $i^{th}$ video frame based on the template image of the target marker image and the search image in the $i^{th}$ video frame above.

Finally, the number of the obtained first feature points is required to be greater than the preset threshold, so that it can be ensured that sufficient first feature points can be used as tracking points for performing tracking on subsequent video frames.

In step S805, a first feature point corresponding to the first feature point information is tracked by using an optical flow tracking algorithm, and determine second feature point information of a second video frame shot by the image shooting apparatus.

Step S805 includes determining an optical flow field between the first video frame and the second video frame; determining an estimated position based on a motion vector of each point in the optical flow field, and the position of the first feature point in the first video frame; determining a template image by using the position of the first feature point in the first video frame, and determining a search image by using the position of the estimated position in the second video frame; performing image search in the search image based on the template image; and determining a point corresponding to the estimated position as a second feature point, and determining the estimated position as the second feature point information if a sub-image is found in the search image, where an image similarity between the sub-image and the template image is greater than the preset similarity threshold.

In both steps S804 and S805, the feature point information may be determined by setting the template image and the search image. The size of the search image set in the second video frame in step S805 is less than the size of the search image set in the first video frame in step S804.

For the manner for determining the second feature point in the second video frame based on the estimated position of the tracking point by performing optical flow tracking on the first video frame, reference may be made to the above description of related content of determining the feature point information of the $j^{th}$ video frame based on points in the $i^{th}$ video frame, or determining the feature point information of the $(j+1)^{th}$ frame based on points in the $j^{th}$ video frame.

The number of pieces of the determined second feature point information also should be greater than a preset number threshold, and after multiple pieces of second feature point information are obtained, points may be supplemented. In an embodiment, the points may be supplemented by: determining whether of the number of pieces of the determined second feature point information is less than a number threshold; determining a new source feature point in the target marker image if the number of pieces of the determined second feature point information is less than the number threshold; and determining a new second feature point in the second video frame based on a position of the new source feature point in the transformed target marker image, to obtain position information of the new second feature point in the second video frame. Based on the point supplementing processing, a mapping relationship between second feature point information of the second feature point supplemented in the second video frame and source feature point information of the target marker image can be established directly.

In step S806, a homography matrix between the second video frame and the target marker image is constructed, where the homography matrix is constructed based on the second feature point information and source feature points in the target marker image. The homography matrix may be the foregoing H matrix.

In step S807, augmented reality processing is performed on the second video frame based on the homography matrix. The homography matrix may be processed to obtain an extrinsic parameter matrix of the image shooting apparatus, and augmented reality processing is performed on the second video frame based on the extrinsic parameter matrix.

The embodiments of the present disclosure involve more than simply determining the target object based on an image similarity between two video frames and superimposing the virtual content. Instead, the target object is determined in a manner of solving an extrinsic parameter of a camera by using the optical flow tracking algorithm in combination with the homography matrix and the virtual content is superimposed on the target object. Because only some feature points need to be analyzed and compared, the time required for recognizing a target is greatly reduced, software and hardware resources are saved, and target recognition efficiency of the video frame is improved, so that the implementation of the AR scenario is quicker and more accurate.

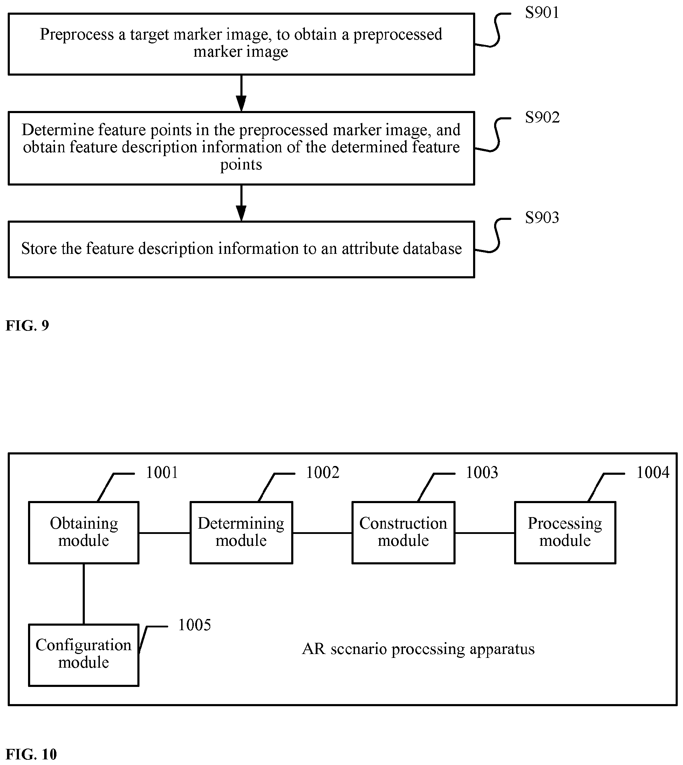

FIG. 9 is a flowchart of a method for setting an attribute database that may optionally be used with embodiments of the invention. The method is used for configuring the attribute database mentioned in step S602 in the foregoing embodiment. The method includes the following steps S901 to S903.

In step S901, a target marker image is preprocessed, to obtain a preprocessed marker image, where an image size of the preprocessed marker image is greater than that of the first video frame, and the preprocessed marker image is a grayscale image. The preprocessing facilitates determining of feature points in the target marker image, and especially facilitates determining of ORB information corresponding to ORB points.

In step S902, feature points in the preprocessed marker image are determined, and feature description information of each of the determined feature points is determined. The feature points in the marker image are ORB points, and the feature description information of each of the feature points is ORB information. Certainly, the feature description information may also be other information that can describe the feature point in the preprocessed marker image.

In step S903, the feature description information is stored to the attribute database. In an embodiment, after an index is constructed for the feature description information, the feature description information for which the index is constructed is stored to the attribute database. An index may be established for the ORB information by using an LSH algorithm, and the ORB information is stored to a pre-configured attribute database.

The embodiments of the present disclosure involve more than simply determining the target object based on an image similarity between two video frames and superimposing the virtual content. Instead, the target object is determined in a manner of solving an extrinsic parameter of a camera by using the optical flow tracking algorithm in combination with the homography matrix and the virtual content is superimposed on the target object. Because only some feature points need to be analyzed and compared, the time required for recognizing a target is greatly reduced, software and hardware resources are saved, and target recognition efficiency of the video frame is improved, so that the implementation of the AR scenario is quicker and more accurate.

FIG. 10 is a schematic structural diagram of an augmented reality scenario processing apparatus according to an embodiment. In embodiments of the invention the apparatus is disposed in a smart device, for example in a smart AR device. The apparatus includes an obtaining module 1001, a determining module 1002, a construction module 1003, and a processing module 1004. The apparatus is configured to carry out the method defined in the claims.

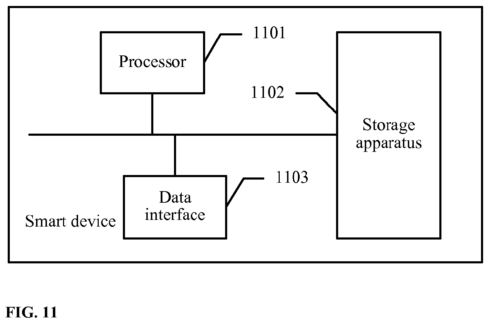

FIG. 11 is a schematic structural diagram of a smart device according to the invention. The smart device includes structures such as a power supply module and a housing. According to the invention the smart device includes: a processor 1101, a storage apparatus 1102, and may also include a data interface 1103.

The storage apparatus 1102 may include a volatile memory, for example, a random access memory (RAM). The storage apparatus 1102 may also include a non-volatile memory, for example, a flash memory, a solid-state drive (SSD), and the like. The storage apparatus 1102 may further include a combination of the foregoing types of memories.

The processor 1101 may be a central processing unit (CPU). The processor 1101 may further include a hardware chip. The hardware chip may be an application-specific integrated circuit (ASIC), a programmable logic device (PLD), or the like. The PLD may be a field-programmable gate array (FPGA), a generic array logic (GAL), or the like.

Optionally, the storage apparatus 1102 is further configured to store program instructions. The processor 1101 may invoke the program instructions, to implement the augmented reality scenario processing method provided in the embodiments of the invention.

The processor 1101 invokes the computer program instructions stored in the storage apparatus 1102, to perform the steps of the method defined in the claims.

For specific implementation of the processor according to this embodiment of the present invention, reference may be made to description of related content in the foregoing embodiments. Details are not described herein.

In an embodiment, a computer storage medium is further provided. The computer storage medium stores a computer program, and when executed by a processor, the computer program implements the method described in any embodiment of the invention.

A person of ordinary skill in the art may understand that all or some of the processes of the methods in the embodiments may be implemented by a computer program instructing relevant hardware. The program may be stored in a computer readable storage medium. When the program is run, the processes of the embodiments of the foregoing methods may be included. The foregoing storage medium may be a magnetic disk, an optical disc, a read-only memory (ROM), or a random access memory (RAM).

**Claims**

1. An augmented reality scenario processing method, applied to a smart device having an image analysis function, the method comprising:

   providing a set of marker images, each including a single object,
   extracting first feature points and first feature point information from each marker image of the set of marker images,
   generating for each marker image of the set of marker images second feature points and second feature point information for performing subsequent image tracking,

extracting first feature points and first feature point information for a first video frame of a video shot with an image shooting apparatus and generating second feature points and second feature point information for the first video frame

determining whether the first video frame includes an object in a marker image of the set of marker images using the first feature point information of the marker image and the first feature point information of the first video frame, and if the first video frame includes the object, the marker image is determined as a target marker image associated with the first video frame, the object in the marker image is determined as a target object, and the second feature points in the marker image are determined as source feature points,

obtaining a homography H matrix between the target marker image and the first video frame through computation using the second feature point information of the target marker image and the second feature point information of the first video frame, and computing an initial extrinsic parameter matrix of the image shooting apparatus using the homography H matrix,

performing homogeneous transformation on the target marker image by using the homography H matrix, and perspective transformation on the target marker image on which the homogeneous transformation has been performed, to obtain a transformed target marker image, wherein the transformed target marker image is an image in the same size as the first video frame, and an image position region of the target object in the transformed target marker image is the same as an image position region of the corresponding target object in the first video frame, and obtaining image position coordinates corresponding to the source feature points in the transformed target marker image,

determining the tracking points in the first video frame by:

(a) determining a region in the transformed target marker image centered at the position of a source feature point in the transformed target marker image as a template image;
(b) determining a region in the first video frame centered at the position of the source feature point in the transformed target marker image as a search window;
(c) searching the search window based on the template image by determining a similarity using a Normalized Cross Correlation algorithm;
(d) determining the position of the source feature point in the transformed target marker image as a tracking point if the similarity is greater than a threshold;
(e) repeating steps (a) to (d) until a set number of tracking points is found,

determining effective feature points on a second subsequent video frame corresponding to the tracking points of the first frame based on motion vectors of points in an optical flow field between the first video frame and the second video frame, determined using an inter-frame optical flow tracking algorithm, and the positions of the tracking points in the first video frame,

determining tracking points in the second video frame by:

(i) determining a template image in the first video frame using a tracking point of the first video frame as the center,
(ii) determining a search image in the second video frame using the effective feature point corresponding to the tracking point as the center;
(iii) performing image search on the search image using the template image;
(iv) using the effective feature point corresponding to the tracking point as a tracking point if a sub-image of the search image whose similarity with the template image is greater than a preset similarity threshold;
(v) repeating steps (i) to (iv) until the number of tracking points in the second video frame reaches a preset quantity threshold,

constructing a mapping relationship between the tracking point information of the second video frame and the source feature point information corresponding to the target marker image,

obtaining a homography H matrix between the second video frame and the target marker image through computation based on the mapping relationship between the tracking point information of the second video frame and the corresponding source feature point information corresponding to the target marker image,

obtaining an extrinsic parameter matrix using the homography H matrix between the second video frame and the target marker image and the intrinsic parameter matrix of the image shooting apparatus,

obtaining virtual content to be superimposed on the target object of the second frame,

performing image processing on the virtual content that is to be superimposed on the target object using the extrinsic and the intrinsic parameter matrix and

superimposing the processed virtual content at the position of the target object according to user requirements.

**2.** The method according to claim 1, wherein the marker images are normalized.

**3.** The method according to claim 1 or 2 wherein Oriented Brief, ORB, information of the feature points is extracted from the marker images and the ORB information is used as feature description information of the feature points of the marker images and the ORB information includes information of pixel points around the feature point on the image, and is used for describing the feature point.

**4.** The method of claim 3 wherein, after multiple pieces of feature description information of multiple feature points in the marker image is obtained, generating a vector of the feature description information and constructing indexes of the multiple pieces of feature description information of the marker image.

**5.** The method of claim 4 further comprising generating a feature description sub-vector and generating each index of each piece of feature description information by using a Locality Sensitive Hashing, LSH, algorithm.

**6.** The method of any preceding claim further comprising scaling a marker image to obtain a grayscale image having a size greater than the size of the first video frame video frame.

**7.** The method of any preceding claim wherein the intrinsic parameter matrix of the image shooting apparatus includes the focal length of the image shooting apparatus when performing shooting.

**8.** A smart device, comprising: a processor and a storage apparatus, wherein the storage apparatus is configured to store computer program instructions; and the processor invokes the computer program instructions to perform the steps of the method of any preceding claim.

**9.** A computer storage medium, the computer storage medium storing computer program instructions that when executed cause a computer to carry out the method of any of claims 1 to 7.

**Patentansprüche**

**1.** Verfahren zum Verarbeiten eines Szenarios mit erweiterter Realität, angewendet auf eine intelligente Vorrichtung, die eine Bildanalysefunktion aufweist, wobei das Verfahren umfasst:

Bereitstellen eines Satzes von Markierungsbildern, die jeweils ein einziges Objekt umfassen,
Extrahieren von ersten Merkmalspunkten und ersten Merkmalspunktinformationen aus jedem Markierungsbild des Satzes von Markierungsbildern,
Generieren, für jedes Markierungsbild des Satzes von Markierungsbildern, von zweiten Merkmalspunkten und zweiten Merkmalspunktinformationen zum Ausführen einer anschließenden Bildverfolgung,
Extrahieren von ersten Merkmalspunkten und ersten Merkmalspunktinformationen für ein erstes Videoeinzelbild einer Videoaufnahme mit einem Bildaufnahmegerät, und Generieren von zweiten Merkmalspunkten und zweiten Merkmalspunktinformationen für das erste Videoeinzelbild,
Bestimmen, ob das erste Videoeinzelbild ein Objekt in einem Markierungsbild des Satzes von Markierungsbildern umfasst, unter Verwendung der ersten Merkmalspunktinformationen des Markierungsbildes und der ersten Merkmalspunktinformationen des ersten Videoeinzelbildes, und falls das erste Videoeinzelbild das Objekt umfasst, wird das Markierungsbild als ein Zielmarkierungsbild bestimmt, das dem ersten Videoeinzelbild zugeordnet ist, das Objekt in dem Markierungsbild wird als Zielobjekt bestimmt, und die zweiten Merkmalspunkte in dem Markierungsbild werden als Ausgangsmerkmalspunkte bestimmt,
Erzielen einer Homographie-, H, Matrix zwischen dem Zielmarkierungsbild und dem ersten Videoeinzelbild durch Berechnen unter Verwendung der zweiten Merkmalspunktinformationen des Zielmarkierungsbildes und der zweiten Merkmalspunktinformationen des ersten Videoeinzelbildes, und durch Berechnen einer anfänglichen extrinsischen Parametermatrix des Bildaufnahmegeräts unter Verwendung der Homographie-, H, Matrix,
Ausführen einer homogenen Transformation an dem Zielmarkierungsbild unter Verwendung der Homographie-, H, Matrix, und einer perspektivischen Transformation an dem Zielmarkierungsbild, an dem die homogene Transformation ausgeführt wurde, um ein transformiertes Zielmarkierungsbild zu erzielen, wobei das transformierte Zielmarkierungsbild ein Bild in der gleichen Größe wie das erste Videoeinzelbild ist, und eine Bildpositionsregion des Zielobjekts in dem transformierten Zielmarkierungsbild die gleiche wie eine Bildpositionsregion des entsprechenden Zielobjekts in dem ersten Videoeinzelbild ist, und Erzielen von Bildpositionskoordinaten, die den Ausgangsmerkmalspunkten in dem transformierten Zielmarkierungsbild entsprechen, Bestimmen der Verfolgungspunkte in dem ersten Videoeinzelbild durch:

(a) Bestimmen einer Region in dem transformierten Zielmarkierungsbild, das auf die Position eines Ausgangsmerkmalspunktes in dem transformierten Zielmarkierungsbild zentriert ist, als Vorlagebild;
(b) Bestimmen einer Region in dem ersten Videoeinzelbild, die auf die Position des Ausgangsmerkmalspunktes in dem transformierten Zielmarkierungsbild zentriert ist, als Suchfenster;
(c) Durchsuchen des Suchfensters basierend auf dem Vorlagebild durch Bestimmen einer Ähnlichkeit unter Verwendung eines normierten Kreuzkorrelationsalgorithmus;
(d) Bestimmen der Position des Ausgangsmerkmalspunktes in dem transformierten Zielmarkierungsbild als Verfolgungspunkt, falls die Ähnlichkeit größer als eine Schwelle ist;
(e) Wiederholen der Schritte (a) bis (d), bis eine eingestellte Anzahl von Verfolgungspunkten gefunden ist, Bestimmen von effektiven Merkmalspunkten in einem zweiten anschließenden Videoeinzelbild, die den Verfolgungspunkten des ersten Einzelbildes entsprechen, basierend auf Bewegungsvektoren von Punkten in einem optischen Flussfeld zwischen dem ersten Videoeinzelbild und dem zweiten Videoeinzelbild, die unter Verwendung eines Algorithmus zum Verfolgen eines einzelbildübergreifenden optischen Flusses und der Positionen der Verfolgungspunkte in dem ersten Videoeinzelbild bestimmt werden,

Bestimmen von Verfolgungspunkten in dem zweiten Videoeinzelbild durch:

(i) Bestimmen eines Vorlagebildes in dem ersten Videoeinzelbild unter Verwendung eines Verfolgungspunktes des ersten Videoeinzelbildes als Mittelpunkt,
(ii) Bestimmen eines Suchbildes in dem zweiten Videoeinzelbild unter Verwendung des effektiven Merkmalspunktes, der dem Verfolgungspunkt entspricht, als Mitte;
(iii) Ausführen einer Bildsuche in dem Suchbild unter Verwendung des Vorlagebildes;
(iv) Verwenden des effektiven Merkmalspunktes, der dem Verfolgungspunkt entspricht, als Verfolgungspunkt, falls ein Teilbild des Suchbildes, dessen Ähnlichkeit mit dem Vorlagebild größer als eine voreingestellte Ähnlichkeitsschwelle ist;
(v) Wiederholen der Schritte (i) bis (iv), bis die Anzahl von Verfolgungspunkten in dem zweiten Videoeinzelbild eine voreingestellte quantitative Schwelle erreicht,

Herstellen einer Zuordnungsbeziehung zwischen den Verfolgungspunktinformationen des zweiten Videoeinzelbildes und den Ausgangs-Merkmalspunktinformationen, die dem Zielmarkierungsbild entsprechen,
Erzielen einer Homographie-, H, Matrix zwischen dem zweiten Videoeinzelbild und dem Zielmarkierungsbild durch Berechnen basierend auf der Zuordnungsbeziehung zwischen den Verfolgungspunktinformationen des zweiten Videoeinzelbildes und den entsprechenden Ausgangsmerkmalspunktinformationen, die dem Zielmarkierungsbild entsprechen,
Erzielen einer extrinsischen Parametermatrix unter Verwendung der Homographie-, H, Matrix zwischen dem zweiten Videoeinzelbild und dem Zielmarkierungsbild und der intrinsischen Parametermatrix des Bildaufnahmegeräts,
Erzielen eines virtuellen Inhalts, der dem Zielobjekt des zweiten Einzelbildes zu überlagern ist,
Ausführen einer Bildbearbeitung an dem virtuellen Inhalt, der dem Zielobjekt zu überlagern ist, unter Verwendung der extrinsischen und der intrinsischen Parametermatrix, und
Überlagern des verarbeiteten virtuellen Inhalts in der Position des Zielobjekts gemäß den Benutzeranforderungen.

2.  Verfahren nach Anspruch 1, wobei die Markierungsbilder normiert sind.

3.  Verfahren nach Anspruch 1 oder 2, wobei Oriented-BRIEF-, ORB, Informationen der Merkmalspunkte aus den Markierungsbildern extrahiert werden, und die ORB-Informationen als Merkmalsbeschreibungsinformationen der Merkmalspunkte der Markierungsbilder verwendet werden, und die ORB-Informationen Informationen von Pixelpunkten um den Merkmalspunkt in dem Bild herum umfassen und zum Beschreiben des Merkmalspunktes verwendet werden.

4.  Verfahren nach Anspruch 3, wobei, nachdem mehrere Merkmalsbeschreibungsinformationsteile von mehreren Merkmalspunkten in dem Markierungsbild erzielt wurden, ein Vektor der Merkmalsbeschreibungsinformationen generiert wird und Indexe der mehreren Merkmalsbeschreibungsinformationsteile des Markierungsbildes erstellt werden.

**5.** Verfahren nach Anspruch 4, ferner umfassend das Generieren eines Merkmalsbeschreibungsteilvektors und Generieren jedes Indexes jedes Merkmalsbeschreibungsinformationsteils unter Verwendung eines lokalitätsempfindlichen Hashing-, LSH, Algorithmus.

**6.** Verfahren nach einem der vorhergehenden Ansprüche, ferner umfassend das Skalieren eines Markierungsbildes, um ein Graustufenbild zu erzielen, das eine Größe aufweist, die größer als die Größe des Einzelbildes des ersten Videoeinzelbildes ist.

**7.** Verfahren nach einem der vorhergehenden Ansprüche, wobei die intrinsische Parametermatrix des Bildaufnahmegeräts die Brennweite des Bildaufnahmegeräts umfasst, wenn Aufnahmen gemacht werden.

**8.** Intelligente Vorrichtung, umfassend: einen Prozessor und ein Speichergerät, wobei das Speichergerät dazu konfiguriert ist, Computerprogrammanweisungen zu speichern; und der Prozessor die Computerprogrammanweisungen aufruft, um die Schritte des Verfahrens nach einem der vorhergehenden Ansprüche auszuführen.

**9.** Computerspeichermedium, wobei das Computerspeichermedium Computerprogrammanweisungen speichert, die, wenn sie ausgeführt werden, bewirken, dass ein Computer das Verfahren nach einem der Ansprüche 1 bis 7 ausführt.

**Revendications**

**1.** Procédé de traitement de scénario de réalité augmentée appliqué à un dispositif intelligent ayant une fonction d'analyse d'image, le procédé comprenant les étapes suivantes :

fournir un ensemble d'images de marqueurs comportant chacune un objet unique,
extraire des premiers points de caractéristiques et des premières informations de points de caractéristiques à partir de chaque image de marqueur de l'ensemble d'images de marqueurs,
pour chaque image de marqueur de l'ensemble d'images de marqueurs, générer des deuxièmes points de caractéristiques et des deuxièmes informations de points de caractéristiques pour réaliser un suivi d'image ultérieur,
extraire des premiers points de caractéristiques et des premières informations de points de caractéristiques pour une première trame vidéo d'une vidéo prise avec un appareil de prise de vue, et générer des deuxièmes points de caractéristiques et des deuxièmes informations de points de caractéristiques pour la première trame vidéo,
déterminer si la première trame vidéo comporte un objet dans une image de marqueur de l'ensemble d'images de marqueurs en utilisant les premières informations de points de caractéristiques de l'image de marqueur et les premières informations de points de caractéristiques de la première trame vidéo, et si la première trame vidéo comporte l'objet, l'image de marqueur est déterminée en tant qu'image de marqueur cible associée à la première trame vidéo, l'objet dans l'image de marqueur est déterminé en tant qu'objet cible, et les deuxièmes points de caractéristiques dans l'image de marqueur sont déterminés en tant que points de caractéristiques source,
obtenir une matrice d'homographie H entre l'image de marqueur cible et la première trame vidéo par le biais d'un calcul utilisant les deuxièmes informations de points de caractéristiques de l'image de marqueur cible et les deuxièmes informations de points de caractéristiques de la première trame vidéo, et calculer une matrice de paramètre extrinsèque initiale de l'appareil de prise de vue en utilisant la matrice d'homographie H,
réaliser une transformation homogène sur l'image de marqueur cible en utilisant la matrice d'homographie H, et une transformation de perspective sur l'image de marqueur cible sur laquelle la transformation homogène a été réalisée pour obtenir une image de marqueur cible transformée, dans lequel l'image de marqueur cible transformée est une image de la même taille que la première trame vidéo, et une région de position d'image de l'objet cible dans l'image de marqueur cible transformée est la même qu'une région de position d'image de l'objet cible correspondant dans la première trame vidéo, et obtenir des coordonnées de position d'image correspondant aux points de caractéristiques source dans l'image de marqueur cible transformée,
déterminer les points de suivi dans la première trame vidéo :

(a) en déterminant une région dans l'image de marqueur cible transformée centrée sur la position d'un point de caractéristique source dans l'image de marqueur cible transformée en tant qu'image modèle ;
(b) en déterminant une région dans la première trame vidéo centrée sur la position du point de caractéristique source dans l'image de marqueur cible transformée en tant que fenêtre de recherche ;
(c) en effectuant une recherche dans la fenêtre de recherche sur la base de l'image modèle en déterminant une similarité à l'aide d'un algorithme de corrélation croisée normalisée ;

(d) en déterminant la position du point de caractéristique source dans l'image de marqueur cible transformée en tant que point de suivi si la similarité est supérieure à un seuil ;

(e) en répétant les étapes (a) à (d) jusqu'à ce qu'un nombre défini de points de suivi soit trouvé,

déterminer des points de caractéristiques effectifs sur une deuxième trame vidéo ultérieure correspondant aux points de suivi de la première trame, en se basant sur des vecteurs de mouvement de points dans un champ de flux optique entre la première trame vidéo et la deuxième trame vidéo déterminés à l'aide d'un algorithme de suivi de flux optique inter-trames, et les positions des points de suivi dans la première trame vidéo,

déterminer des points de suivi dans la deuxième trame vidéo :

(i) en déterminant une image modèle dans la première trame vidéo en utilisant un point de suivi de la première trame vidéo comme centre,

(ii) en déterminant une image de recherche dans la deuxième trame vidéo en utilisant le point de caractéristique effectif correspondant au point de suivi comme centre ;

(iii) en réalisant une recherche d'images sur l'image de recherche en utilisant l'image modèle ;

(iv) en utilisant le point de caractéristique effectif correspondant au point de suivi en tant que point de suivi si une sous-image de l'image de recherche présente une similarité avec l'image modèle supérieure à un seuil de similarité prédéfini ;

(v) en répétant les étapes (i) à (iv) jusqu'à ce que le nombre de points de suivi dans la deuxième trame vidéo atteigne un seuil quantitatif prédéfini,

construire une relation de mappage entre les informations de point de suivi de la deuxième trame vidéo et les informations de points de caractéristiques source correspondant à l'image de marqueur cible,

obtenir une matrice d'homographie H entre la deuxième trame vidéo et l'image de marqueur cible par le biais d'un calcul sur la base de la relation de mappage entre les informations de point de suivi de la deuxième trame vidéo et les informations de points de caractéristiques source correspondants qui correspondent à l'image de marqueur cible,

obtenir une matrice de paramètre extrinsèque en utilisant la matrice d'homographie H entre la deuxième trame vidéo et l'image de marqueur cible et la matrice de paramètre intrinsèque de l'appareil de prise de vue,

obtenir un contenu virtuel à superposer sur l'objet cible de la deuxième trame,

réaliser un traitement d'image sur le contenu virtuel qui doit être superposé sur l'objet cible en utilisant la matrice de paramètre extrinsèque et la matrice de paramètre intrinsèque et

superposer le contenu virtuel traité sur la position de l'objet cible selon des besoins de l'utilisateur.

2. Procédé selon la revendication 1, dans lequel les images de marqueur sont normalisées.

3. Procédé selon la revendication 1 ou 2, dans lequel des informations *Oriented Brief,* ORB, des points de caractéristiques sont extraites des images de marqueur, et les informations ORB sont utilisées comme informations de description de caractéristiques des points de caractéristiques des images de marqueur, et les informations ORB comportent des informations de points de pixels autour du point de caractéristique sur l'image et sont utilisées pour décrire le point de caractéristique.

4. Procédé selon la revendication 3 dans lequel, après l'obtention de multiples informations de description de caractéristiques de multiples points de caractéristiques dans l'image de marqueur, un vecteur des informations de description de caractéristiques est généré et des index des multiples informations de description de caractéristiques de l'image de marqueur sont construits.

5. Procédé selon la revendication 4, comprenant en outre la génération d'un sous-vecteur de description de caractéristique et la génération de chaque index de chaque information de description de caractéristique à l'aide d'un algorithme de hachage sensible à la localité, LSH.

6. Procédé selon l'une des revendications précédentes, comprenant en outre la mise à l'échelle d'une image de marqueur pour obtenir une image en niveaux de gris dont la taille est supérieure à la taille de la première trame vidéo trame vidéo.

7. Procédé selon l'une des revendications précédentes, dans lequel la matrice de paramètre intrinsèque de l'appareil de prise de vue comporte la longueur focale de l'appareil de prise de vue lors de la réalisation de la prise de vue.

8. Dispositif intelligent, comprenant : un processeur et un appareil de stockage, dans lequel l'appareil de stockage est configuré pour stocker des instructions de programme informatique ; et le processeur invoque les instructions de programme informatique pour réaliser les étapes du procédé selon l'une des revendications précédentes.

9. Support de stockage informatique, le support de stockage informatique stockant des instructions de programme informatique qui, lorsqu'elles sont exécutées, amènent un ordinateur à mettre en œuvre le procédé selon l'une des revendications 1 à 7.

**FIG. 1**

Attribute
database

201

Extract ORB information of
the i$^{th}$ video frame

Determine multiple matching ORB
point sets matching the ORB
information of the i$^{th}$ video frame

S202

S200

Normalize an
i$^{th}$ video
frame

Distance proportion filtering

S203

Perform filtering based on the number
of pieces of ORB information

S204

Score the matching ORB point sets

S205

Determine a target marker image

S206

FIG. 2

S301: Load a
marker image

S302: Perform object
recognition

S303: Determine tracking
points

S305: Compute an H
matrix

S306: Obtain an extrinsic parameter
matrix through computation

S308: Obtain an H matrix
through compution

S309: Obtain an extrinsic parameter
matrix through computation

S304: Inter-
frame optical
flow tracking

S307: Inter-
frame optical
flow tracking

i$^{th}$ video frame

j$^{th}$ video frame

(j+1)$^{th}$ video frame

**FIG. 3**

Marker image before transformation

Transformed marker
image

i$^{th}$ video frame

**FIG. 4**

B

A

Line of sight

Matched
feature
points

Image
shooting
apparatus

Image
shooting
apparatus

Image
shooting
apparatus

Image
shooting
apparatus

Position 1

Position 2

Position 3

Position 4

**FIG. 5a**

FIG. 5b

World coordinate system

P(X, Y, Z)

u

x

(u, v)

Optical axis

Xc

Zc    Fc

Image coordinate
system

Image shooting
apparatus
coordinate
system

y

v

Yc

**FIG. 6**

Obtain first feature point information that is in a first video frame and that is related to a target marker image, the first video frame being shot by an image shooting apparatus  ⌒ S701

↓

Track, by using an optical flow tracking algorithm, a first feature point corresponding to the first feature point information, and determine second feature point information of a second video frame shot by the image shooting apparatus  ⌒ S702

↓

S703 Construct a homography matrix between the second video frame and the target marker image based on the second feature point information and source feature points in the target marker image  ⌒ S703

↓

Perform augmented reality processing on the second video frame based on the homography matrix  ⌒ S704

**FIG. 7**

Obtain feature description information of a first video frame shot
by an image shooting apparatus ⌐ S801

↓

Perform retrieval in an attribute database based on the obtained
feature description information ⌐ S802

↓

Determine a target marker image according to a retrieval result ⌐ S803

↓

Obtain first feature point information that is in the first video
frame shot by the image shooting apparatus and that is related to
the target marker image ⌐ S804

↓

Track, by using an optical flow tracking algorithm, a first feature
point corresponding to the first feature point information, and
determine second feature point information of a second video
frame shot by the image shooting apparatus ⌐ S805

↓

Construct a homography matrix between the second video frame
and the target marker image ⌐ S806

↓

Perform augmented reality processing on the second video frame
based on the homography matrix ⌐ S807

FIG. 8

Preprocess a target marker image, to obtain a preprocessed marker image — S901

Determine feature points in the preprocessed marker image, and obtain feature description information of the determined feature points — S902

Store the feature description information to an attribute database — S903

**FIG. 9**

| Obtaining module — 1001 | Determining module — 1002 | Construction module — 1003 | Processing module — 1004 |

Configuration module — 1005

AR scenario processing apparatus

**FIG. 10**

**FIG. 11**

**EP 3 680 808 B1**

**REFERENCES CITED IN THE DESCRIPTION**

**Patent documents cited in the description**

- US 20120180084 A
- US 20150193970 A